# EUROPÄISCHE PATENTSCHRIFT

(11) **EP 2 875 216 B1**
(45) Veröffentlichungstag und Bekanntmachung des Hinweises auf die Patenterteilung: **18.05.2016**
(21) Anmeldenummer: 13737611.7
(22) Anmeldetag: 18.07.2013
(51) Int. Cl.: B23P 11/02, B21D 53/84, F01L 1/047, B23K 26/00

(54) **NOCKENWELLE**
CAMSHAFT
ARBRE À CAMES

(30) Priorität: 18.07.2012 DE 102012212627
(43) Veröffentlichungstag der Anmeldung: 27.05.2015
(73) Patentinhaber: Mahle International GmbH, 70376 Stuttgart (DE)
(72) Erfinder: LETTMANN, Markus, 75249 Kieselbronn (DE); RIEGER, Ralf, 71711 Steinheim a.d. Murr (DE); SCHNEIDER, Falk, 70825 Korntal-Münchingen (DE)
(74) Vertreter: BRP Renaud & Partner mbB Rechtsanwälte Patentanwälte Steuerberater
(86) Internationale Anmeldenummer: PCT/EP2013/065141
(87) Internationale Veröffentlichungsnummer: WO 2014/013001

(56) Entgegenhaltungen:
- EP-A2- 0 486 876
- DE-A1- 3 431 361
- DE-A1-102009 060 352
- JP-A- 2002 257 149
- US-A- 4 983 797

## Beschreibung

Die vorliegende Erfindung betrifft eine Nockenwelle gemäß dem Oberbegriff des Anspruchs 1 sowie einen Nocken für eine derartige Nockenwelle.

Nockenwellen sind fester Bestandteil von Brennkraftmaschinen. Dabei weist die Nockenwelle eine (Leer-)Welle auf, auf der zumindest ein Nocken gefügt ist. Zum Fügen der Welle und der Nocken kommen dabei in der Regel thermische Fügeverfahren zum Einsatz. Dabei ist die Verbindung der Welle und des Nockens über eine nockenseitige Fügefläche, die in der Regel in einer Nockenbohrung angeordnet ist, und einer wellenseitigen Fügefläche gewährleistet. Nachteilig dabei ist, dass das über die Nockenwelle übertragbare Moment durch die Reibung zwischen der nockenseitigen Fügefläche und der wellenseitigen Fügefläche begrenzt ist.

Aus der DE 10 2009 060 352 A1 ist Verfahren zum Herstellen einer Nockenwelle zur Ventilsteuerung eines Verbrennungsmotors bekannt, umfassend die Schritte: Ausrichten einer Mehrzahl scheibenartiger Nocken mit je einem zentralen, runden, senkrecht zu einer Nockenhauptebene erstreckten Durchbruch derart, dass die Durchbrüche der axial beabstandet angeordneten Nocken miteinander fluchten. Unterkühlen einer Leerwelle runden Außenprofils relativ zu den Nocken, wobei der Außendurchmesser der unterkühlten Leerwelle kleiner und der Außendurchmesser der nicht unterkühlten Leerwelle größer als der Innendurchmesser der Nockendurchbrüche ist. Einschieben der unterkühlten Leerwelle in die fluchtenden Nockendurchbrüche. Herbeiführen eines Temperaturausgleichs zwischen der Leerwelle und den Nocken, sodass die Leerwelle und die Nocken fest zu einer Nockenwelle verbunden werden, wobei die Innenflächen der Nockendurchbrüche und/oder die Außenfläche der Leerwelle in ihren im eingeschobenen Zustand von den Nockendurchbrüchen umgriffenen Abschnitten ein mittels Laserablation erzeugtes Raumuster aufweisen.

Die vorliegende Erfindung beschäftigt sich insbesondere mit dem Problem, für eine gattungsgemäße Nockenwelle eine verbesserte oder zumindest alternative Ausführungsform anzugeben, die sich insbesondere durch einen geringeren Herstellungsaufwand auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Verbindung zwischen einem Bauteil und einer Welle, beispielsweise eine drehmomentübertragende Verbindung zwischen einem Nocken und der Nockenwelle, neben einem insbesondere thermischen Fügen zusätzlich durch eine Aufrauhung einer bauteilseitigen Fügefläche und/oder einer wellenseitigen Fügefläche zu verbessern. Erfindungsgemäß weisen dabei die bauteilseitige Fügefläche und/oder die wellenseitige Fügefläche eine mittels Laser eingebrachte und gehärtete Rauheit auf, die eine aus einzelnen Laserpunkten zusammengesetzte Spur aufweist, wobei die Mittelpunkte der einzelnen Laserpunkte versetzt zueinander und die einzelnen Laserpunkte einander überlagernd angeordnet sind. Durch die erfindungsgemäße Aufrauhung der bauteilseitigen und/oder der wellenseitigen Fügefläche lediglich mit Laserpunkten oder mit Laserpunktspuren können der Aufwand zum Aufrauen und damit die Taktzeit deutlich reduziert und dadurch wiederum die Montage der Nockenwelle beschleunigt werden. Die Reduzierung der Taktzeit liegt insbesondere darin begründet, dass nunmehr nicht mehr die gesamte Fügefläche aufgeraut, das heißt beispielsweise gelasert, werden muss, sondern lediglich noch Teilflächen der Fügefläche(n), wodurch der Aufrauprozess an sich gestrafft werden kann. Durch die Laserpunkte bzw. aus einzelnen Laserpunkten zusammengesetzten Spuren lässt sich auch ein übertragbares Drehmoment deutlich steigern, da die Ränder der Laserpunkte wie Widerhaken wirken und sich in dem Material der gegenüberliegen Fügefläche verkrallen bzw. eingraben. Soll die Rauheit in die Welle eingebracht werden, so sollte diese aufgrund ihres geringeren Kohlenstoffgehalts zunächst aufgekohlt und beispielsweise mittels eines Lasers gehärtet werden. Das Härten kann dabei vor oder während dem Einbringen der Rauheit erfolgen.

Selbstverständlich kann das mit der Nockenwelle gefügte Bauteil alternativ zum Nocken auch als Signalgeberrad, als Stopfen, als Zahnrad, als Antriebs- bzw. Abtriebselement, als Werkzeugschnittstelle, als Einstellelement, als Ausrichteelement, als Montagehilfselement, als Lagerring oder als Hülse ausgebildet sein. Ebenso ist denkbar, dass ein derartiges, zuvor genanntes Bauteil mir einer allgemeinen Welle gefügt wird, ohne dass diese speziell als Nockenwelle ausgebildet ist. Für die gesamte Anmeldung gilt daher, dass der Begriff "Nockenwelle" stets durch den Begriff "Welle" und der Begriff "Nocken" stets durch den Begriff "Bauteil" ersetzt bzw. verallgemeinert werden kann.

Bei einer vorteilhaften Weiterbildung der erfindungsgemäßen Lösung beträgt die vordefinierte Rauheit ca. Rz 2-25. Durch eine genaue Einstellung der Rauheit ist auch die genaue Einstellung eines übertragbaren Drehmoments möglich. Zugleich kann die Haltezeit des erwärmten Nockens durch die Aufrauhung und damit auch die Taktzeit reduziert werden.

Zweckmäßig sind die gelaserten Spuren parallel, quer oder schräg zur Nockenwellenachse ausgerichtet. Zusätzlich oder alternativ ist denkbar, dass die bauteilseitige Fügefläche und die wellenseitige Fügefläche eine unterschiedliche Rauheit aufweisen, insbesondere hervorgerufen durch eine unterschiedliche Laserleistung. Insbesondere bei einer parallelen Ausrichtung der Spuren der vordefinierten Rauheit in Bezug auf die Nockenwellenachse kann ein erleichtertes Aufschieben auf den nunmehr aufgerauten und durch den Laserstrahl zugleich auch gehärteten Spuren erfolgen, wobei zugleich auch die Verwendung einer rohen, das heißt unbearbeiteten Nockenwelle bzw. allgemein einer Welle denkbar ist. Trotz dem besseren Fügen in axialer Richtung können so hohe Drehmomente zwischen Nocken und Welle übertragen werden, da sich bei der Drehmomentübertragung die Beanspruchungsrichtung ändert. Durch das Lasern kann dabei eine vergleichsweise harte Körnung im Bereich der Rauheit erzielt werden, was bei insbesondere weicheren Bauteilen oder Wellen zu einer härteren Oberflächenstruktur führt, die wiederum zur Übertragung von höheren Drehmomenten ausgelegt ist. Die härtere Oberflächenstruktur kann dabei durch ein vergleichsweise schnelles Abkühlen nach dem Lasern zusätzlich unterstützt werden. Auch ist denkbar, dass sich die bauteilseitigen harten Oberflächenstrukturen in die dazu weichere Welle eingraben und dadurch eine Verzahnung bewirken.

Durch eine definierte Laserleistung kann dabei eine definierte Rauheit und darüber ein definiertes übertragbares Drehmoment erzeugt werden. Zusätzlich zur Variation bzw. Beeinflussung der Laserleistung ist auch ein mehrmaliges Lasern bzw. einer Bearbeitungsspur bzw. eines Bearbeitungsbereichs denkbar, wodurch die gewünschte Härte besonders exakt einstellbar ist. Über die Spuren können dabei grundsätzlich auch Bearbeitungsmuster, bspw. Karo, Rauten, Rechteckmuster, etc. erzeugt werden.

Bei einer vorteilhaften Weiterbildung der erfindungsgemäßen Lösung sind die Bauteile mittels Presssitz und/oder mittels thermischen Fügesitz mit der Nockenwelle verbunden, wobei im letzten Fall die Nocken erwärmt werden. Bei herkömmlichen thermischen Fügesitzen wird üblicherweise die Welle gekühlt und/oder der Nocken bzw. das Bauteil erwärmt. Im vorliegenden Fall hingegen werden ausschließlich die Bauteile, das heißt im speziellen Fall die Nocken, erwärmt und dann über die zugehörige Welle bzw. Nockenwelle geschoben. Selbstverständlich ist auch ausschließlich ein Presssitz ohne thermische Vorbehandlung vorstellbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine erfindungsgemäße Nockenwelle in einer Explosionsdarstellung,
- Fig. 2: eine Nockenwelle mit einem stirnseitig angeordneten Bauelement,
- Fig. 3: eine mittels Laser eingebrachte und gehärtete Rauheit, die aus einzelnen Laserpunkten zusammengesetzte Spuren aufweist, wobei die Mittelpunkte der einzelnen Laserpunkte versetzt zueinander und die einzelnen Laserpunkte einander überlagernd angeordnet sind,
- Fig. 4: eine Darstellung wie in Fig. 3, jedoch mit parallel zu den Spuren verlaufender Drehrichtung,
- Fig. 5: eine mikroskopische Detaildarstellung bei einer unterbrochenen Ausführungsform der Spuren aus Fig. 4,
- Fig. 6: eine mikroskopische Schnittdarstellung durch einen Laserpunkt der Rauheit.

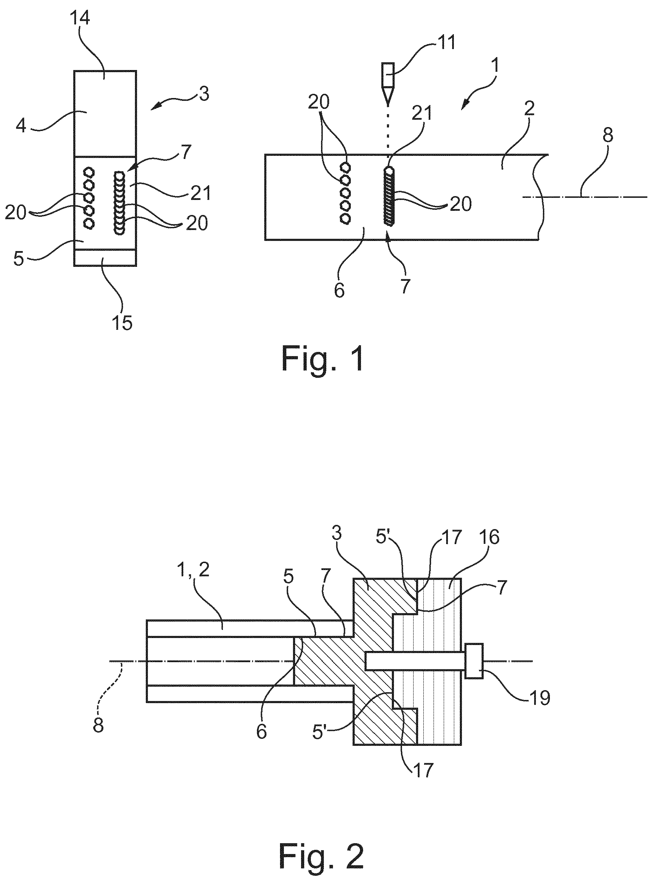

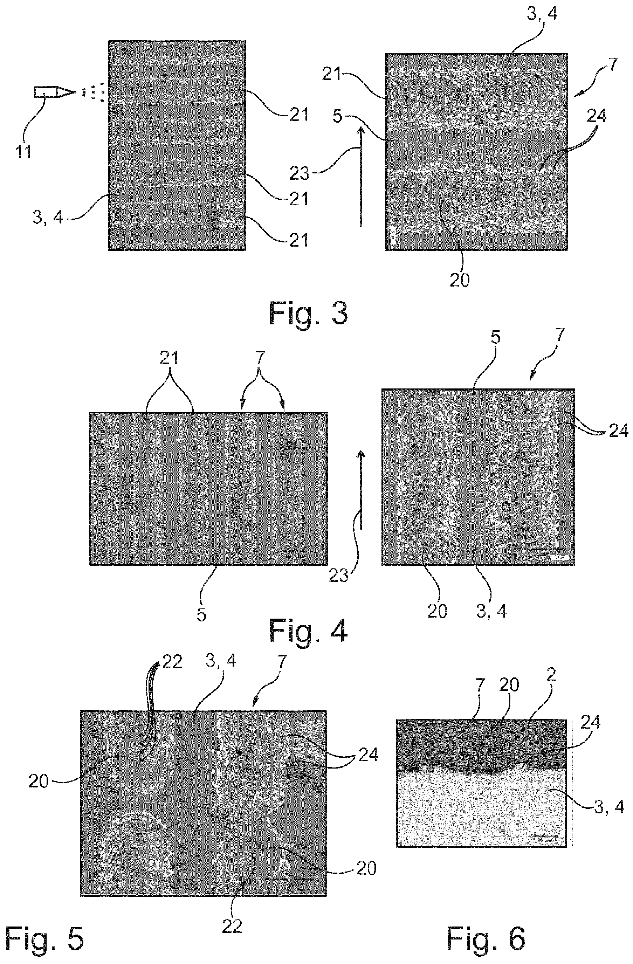

Entsprechend der Figur 1, weist eine erfindungsgemäße Nockenwelle 1 für eine im Übrigen nicht gezeigte Brennkraftmaschine eine Welle 2 sowie zumindest ein, insbesondere thermisch damit gefügtes Bauteil 3, hier einen Nocken 4, auf, das über eine bauteilseitige Fügefläche 5 mit einer wellenseitigen Fügefläche 6 verbunden werden kann. Erfindungsgemäß weist nun die bauteilseitige Fügefläche 5 und/oder die wellenseitige Fügefläche 6 eine mittels Laser 11 eingebrachte und gehärtete Rauheit 7 auf, die aus einzelnen Laserpunkten 20 besteht und/oder die eine aus einzelnen Laserpunkten 20 zusammengesetzte Spur 21 aufweist, wobei die Mittelpunkte 22 der einzelnen Laserpunkte 20 versetzt zueinander und die einzelnen Laserpunkte 20 einander überlagernd angeordnet sind (vgl. auch Fig. 3-5). Die eingebrachte Rauheit 7 kann dabei zwischen Rz 2-25 betragen.

Generell kann das Bauteil 3 wie im vorliegenden Fall als Nocken 4 ausgebildet sein, wobei es selbstverständlich auch vorstellbar ist, dass dieses beispielsweise als Signalgeberrad, als Stopfen, als Lagerring, als Ketten-/Riemenrad, als Zahnrad, als Antriebs- bzw. Abtriebselement, als Werkzeugschnittstelle, als Einstellelement, als Ausrichteelement, als Montagehilfselement oder als Hülse ausgebildet ist. Die nockenseitige Fügefläche 5 und/oder die wellenseitige Fügefläche 6 sind darüber hinaus vorzugsweise im Bereich der zugehörigen Nockenerhebung 14, das heißt einer Nockenspitze und/oder des gegenüberliegenden Grundkreises 15 aufgeraut, wobei sich die Rauheit 7 im Bereich der Nockenerhebung 14 über einen Umfangswinkel von ca. 20-140°, bevorzugt von ca. 50-120°, und im gegenüberliegenden Bereich des Grundkreises 15 über einen Umfangswinkel von ca. 20-140°, bevorzugt von ca. 20-90° erstreckt. Es muss somit nicht die gesamte Fügefläche 5,6 aufgeraut werden, sondern lediglich ein Teil, was Zeit und Kosten spart.

Ein Verbinden der Nocken 4 mit der Nockenwelle 1 bzw. generell der Bauteile 3 mit der Welle 2 kann über einen einfachen Presssitz oder aber über einen thermischen Fügesitz erfolgen, wobei dann die Nocken 4, das heißt die Bauteile 3 zuvor erwärmt werden. Sämtliche benutzten Wellen 2 bzw. Nockenwellen 1 können dabei fertig bearbeitet oder aber roh sein.

Dies Spuren 21 können parallel, quer oder schräg zur Nockenwellenachse 8 ausgerichtet sein, wobei auch denkbar ist dass die bauteilseitige Fügefläche 5 und die wellenseitige Fügefläche 6 eine unterschiedliche Rauheit 7 aufweisen, insbesondere hervorgerufen durch eine unterschiedliche Laserleistung. Generell können dabei die Rauheit 7 an einem oder an beiden Reibpartnern, das heißt sowohl am Bauteil 3 als auch an der Welle 2 angeordnet werden, wobei denkbar ist, dass dabei gleiche oder unterschiedliche Rauheiten 7 eingebracht werden.

Generell kann das Bauteil 3 als Nocken 4 ausgebildet sein und eine als Nockensitz ausgebildete und innengedrehte Fügefläche 5 aufweisen, denen die Rauheit 7 in Form von Laserstrukturen überlagert ist. Gedrehte Nockeninnensitze haben in Umfangsrichtung orientierte Drehspuren (Drehpass) mit in Grenzen einstellbarer Tiefe, Breite, etc.. Wird auf eine solche spanend hergestellte Grundstruktur noch zusätzlich eine Rauheit 7 quer (Winkel 0...90° relativ zum Drehpass) zu dem Drehpass eingebracht, entsteht ein Karo / Rauten / Rechteckmuster mit vielen Spitzen im Profil. Variiert werden können dabei ein Winkel zum Drehpass, ein Abstand der Spuren 21, eine Tiefe derselben. Die Spuren 21 müssen keineswegs parallel zueinander verlaufen, sondern können sich beispielsweise auch kreuzen. Generell ermöglicht ein derartiges Profil bei der Montage des Nockens 4 eine deutlich verbesserte Drehmomentübertragung. Da die eigentliche Kontaktfläche kleiner wird, erhöht sich die Flächenpressung im Pressverband. Die spitzen Strukturen der Rauheit 7 "verhaken" sich besser in der gegenüberliegenden Fügefläche.

Betrachtet man die Fig. 2, so kann man erkennen, dass am Bauteil 3 ein Bauelement 16 angebunden ist, wobei am Bauteil 3 bauteilseitige Fügeflächen 5' und/oder am Bauelement 16 bauelementseitige Fügeflächen 17 angeordnet sind, die bei am Bauteil 3 angebundenem Bauelement 16 miteinander in Kontakt stehen und wobei die bauteilseitige Fügefläche 5' und/oder die bauelementseitige Fügefläche 17 eine vordefinierte Rauheit 7 aufweisen/aufweist. Das Bauelement 16 und das Bauteil 3 können über eine Schraubverbindung 19 miteinander verbunden sein. Die bauteilseitige Fügeflächen 5,5' und/oder die wellenseitige Fügefläche 6 und/oder die bauelementseitige Fügefläche 17 können dabei stirnseitig oder umfangsseitig an der jeweiligen Komponente 2, 3, 16 angeordnet sein.

Durch das Lasern wird eine Mikrohärte erzeugt, die bei insbesondere weicheren Wellen 2 oder Bauteilen 3 eine härtere Oberflächenstruktur hervorruft, mittels welcher dann wiederum ein höheres Drehmoment übertragen werden kann. Die höhere Mikrohärte kann beispielsweise durch ein schnelles Abkühlen begünstigt werden.

Generell kann das Bauteil 3, insbesondere der Nocken 4, aus einem Metall mit einem Kohlenstoffanteil von zumindest 0,4 Gew.-% ausgebildet sein, wogegen die Welle 2 einen geringeren Kohlenstoffanteil aufweist. Als Werkstoffe für den Nocken 4 bzw. generell das Bauteil 3, kommen insbesondere gut härtbare Stähle, wie zum Beispiel 100Cr6, C60, C45 oder Sintermaterialien, wie z.B. A1100, 1200, 1300, 1500 oder Gussmaterialien, wie EN GJL 250 oder EN GJS 700 in Frage. Generell können auch luftgehärtete Stähle für die Bauteile 3 verwendet werden. Für die Welle 2 hingegen kommen insbesondere Stähle wie E335 und C60E in Betracht, die ggf. zum Einbringen der Rauheit 7 aufgekohlt werden müssen.

In Fig. 3 verläuft dabei eine Verdrehrichtung 23 der Welle 2 orthogonal zur Richtung der Spuren 21, wobei in diesem Fall insbesondere Ränder/Kanten 24 der Spuren 21 die maximal möglichen Verdrehmomente beeinflussen. Demgegenüber verläuft in Fig. 4 die Verdrehrichtung 23 der Welle 2 parallel zur Richtung der Spuren 21, wodurch ein noch größerer Widerstand gegen ein Rutschen und damit eine noch größere Drehmomentübertragungsfähigkeit erreichbar sind. Die Drehmomentübertragungsfähigkeit und damit der Widerstand gegen ein Verrutschen zwischen Welle 2 und Bauteil 3 werden dabei von dem beim Laserpunktieren aufgeworfenen Rand 24 (vgl. Fig. 3-6) beeinflusst, der üblicherweise am Bauteil 3 bzw. am Nocken 4 angeordnet ist und sich beim Fügen mit der Welle 2 in diese eingräbt. Das Eingraben ist durch den im Vergleich zum Werkstoff des Bauteils 3 weicheren Werkstoff der Welle 2 möglich. In den Fig. 3-6 sind die Rauheit 7, beispielsweise die Laserpunkte 20, immer im Bauteil 3 bzw. Nocken 4 eingebracht, wobei selbstverständlich auch ein Laserpunktieren der Welle 2 und damit ein Erzeugen von Rändern 24 an der Welle 2 denkbar ist, wobei hierzu die Welle 2 zunächst eine Aufkohlung erfahren muss, um dann beim Laserpunktieren gehärtet werden zu können. Das Aufkohlen kann entfallen, wenn die Welle 2 aus einem kohlenstoffreicherem Material, z.B. C60E gefertigt ist. Dies hat insbesondere den Vorteil, dass lediglich ein einziges Bauteil, nämlich die Welle 2 bearbeitet werden muss und nicht eine Vielzahl von Bauteilen 3 bzw. Nocken 4. Generell konnte in Versuchen ein Verdrehmoment beim Laserpunktieren der Welle 2 von ca. 135 auf 225 Nm und beim Laserpunktieren des Bauteils 3 sogar auf 325 Nm gesteigert werden, was einer Steigerung um über 100% entspricht. Unter dem Verdrehmoment wird dabei dasjenige Moment verstanden, bei welchem das Bauteil 3 an der Welle 2 zu rutschen beginnt.

Das Laserstrukturieren vom Nockensitz (wellen- und/oder nockenseitig) ist eine vielversprechende Methode um deutliche Steigerungen des Verdrehmoments bei thermisch gefügten Nocken 4 auf der Welle 2 zu erzielen. Bei weiteren Untersuchungen wurde der Fokus auf die Verbesserung der Wirtschaftlichkeit bei gleichzeitiger Steigerung des Verdrehmoments gesetzt. Es hat sich gezeigt, dass ein höheres Verdrehmoment erzielt werden kann, wenn nur der Nocken 4 mittels Laser 11 strukturiert wird. Wird die Welle 2 strukturiert und der Nocken 4 nicht, wird zwar ein im Vergleich zum bisherigen reinen thermischen Fügen erhöhtes, aber kein so hohes Verdrehmoment erreicht wie beim Laserstrukturieren des Nockens 4. Dies ist auf die verwendete Materialpaarung Nocken/Welle zurückzuführen. Als Werkstoff für die Nocken 4 sollte ein kohlenstoffreicher Stahl (z.B. C60 oder 100Cr6) zum Einsatz kommen, da sich dieser aufgrund des höheren Kohlenstoffanteils besser härten lässt als der üblicherweise für die Welle 2 verwendete E 335 Stahl mit geringerem Kohlenstoffanteil. Beim Laserstrukturieren wird lokal eine hohe Energiemenge eingebracht, die zu einer Mikrohärte genau in dem Bereich der aufgeworfenen Strukturen, das heißt insbesondere der Ränder 24 sorgt. Aus diesem Grund graben sich die beim Strukturieren entstehenden Ränder 24 (Aufwürfe) beim Nocken 4 stärker in die Welle 2 ein, als es anders herum der Fall wäre. Ist die Welle 2 auch härtbar und wird diese mittels Laser strukturiert kann dieser Effekt auch umgekehrt beobachtet werden. Die harten Strukturen auf der Welle graben sich in die Nocken Gegenfläche ein.

Des Weiteren hat sich gezeigt, dass einzelne Laserpunkte 20 oder Laserpunkte 20, die sich teilweise überlappen (vgl. Fig. 3-6), ebenfalls zu einer Erhöhung des Verdrehmoments führen, da hierdurch im Vergleich zu einer durchgängigen "Laserspur" mehr Widerhakenstrukturen auf der Oberfläche gebildet werden können, die sich dann in die Gegenfläche eingraben können.

## Patentansprüche

1. Nockenwelle (1) für eine Brennkraftmaschine mit einer Welle (2) und zumindest einem damit gefügten Bauteil (3), das über eine bauteilseitige Fügefläche (5) mit einer wellenseitigen Fügefläche (6) verbunden ist, wobei die bauteilseitige Fügefläche (5) und/oder die wellenseitige Fügefläche (6) eine mittels Laser (11) eingebrachte und gehärtete Rauheit (7) aufweist,
**dadurch gekennzeichnet,**
**dass** die Rauheit (7) eine aus einzelnen Laserpunkten (20) zusammengesetzte Spur (21) aufweist, wobei die Mittelpunkte (22) der einzelnen Laserpunkte (20) versetzt zueinander und die einzelnen Laserpunkte (20) einander überlagernd angeordnet sind.

2. Nockenwelle nach Anspruch 1,
**dadurch gekennzeichnet,**
**dass** das Bauteil (3) aus einem Metall mit einem Kohlenstoffanteil von zumindest 0,4 Gew.-% ausgebildet ist, wogegen die Welle (2) einen geringeren Kohlenstoffanteil aufweist.

3. Nockenwelle nach Anspruch 1 oder 2,
**dadurch gekennzeichnet,**
**dass** die Welle (2) vor dem Einbringen der Rauheit (7) mittels des Lasers (11) entweder aufgekohlt wurde oder aus einem kohlenstoffreichen Werkstoff mit mind. 0,4 Gew.-% C Anteil besteht.

4. Nockenwelle nach einem der Ansprüche 1 bis 3,
**dadurch gekennzeichnet,**
**dass** die Welle (2) aus E335-Stahl oder C60E und die Nocken (4) aus C60 bzw. 100Cr6 Stahl oder einem Sintermaterial ausgebildet sind.

5. Nockenwelle nach einem der vorhergehenden Ansprüche,
**dadurch gekennzeichnet,**
**dass** die vordefinierte Rauheit (7) ca. Rz 2 bis 25 beträgt.

6. Nockenwelle nach einem der vorhergehenden Ansprüche,
**dadurch gekennzeichnet,**
**dass** das Bauteil (3) als Signalgeberrad, als Ketten-/Riemenrad, als Stopfen, als Zahnrad, als Antriebs- bzw. Abtriebselement, als Werkzeugschnittstelle, als Einstellelement, als Ausrichteelement, als Montagehilfselement, als Lagerring oder als Hülse ausgebildet ist.

7. Nockenwelle nach einem der Ansprüche 1 bis 6,
**dadurch gekennzeichnet,**
- **dass** die Spuren (21) parallel, quer oder schräg zur Nockenwellenachse (8) ausgerichtet sind, und/oder
- **dass** die bauteilseitige Fügefläche (5) und die wellenseitige Fügefläche (6) eine unterschiedliche Rauheit (7) aufweisen.

8. Nockenwelle nach einem der vorhergehenden Ansprüche,
**dadurch gekennzeichnet,**
**dass** am Bauteil (3) ein Bauelement (16) angebunden ist, wobei am Bauteil (3) bauteilseitige Fügeflächen (5') und/oder am Bauelement (16) bauelementseitige Fügeflächen (17) angeordnet sind, die bei am Bauteil (3) angebundenem Bauelement (16) miteinander in Kontakt stehen und wobei die bauteilseitige Fügefläche (5') und/oder die bauelementseitige Fügefläche (17) eine mittels Laser (11) eingebrachte und gehärtete Rauheit (7) aufweist, die eine aus einzelnen Laserpunkten (20) zusammengesetzte Spur (21) besitzt und wobei die Mittelpunkte (22) der einzelnen Laserpunkte (20) versetzt zueinander und die einzelnen Laserpunkte (20) einander überlagernd angeordnet sind.

9. Nockenwelle nach Anspruch 8,
**dadurch gekennzeichnet,**
**dass** die bauteilseitige Fügeflächen (5,5') und/oder die wellenseitige Fügefläche (6) und/oder die bauelementseitige Fügefläche (17) stirnseitig oder umfangsseitig an der jeweiligen Komponente angeordnet ist.

10. Bauteil (3) nach einem der Ansprüche 1 bis 9, bei dem die bauteilseitige Fügefläche (5) eine mittels Laser (11) eingebrachte und gehärtete Rauheit (7) aufweist,
wobei die Rauheit (7) eine aus einzelnen Laserpunkten (20) zusammengesetzte Spur (21) aufweist, wobei die Mittelpunkte (22) der einzelnen Laserpunkte (20) versetzt zueinander und die einzelnen Laserpunkte (20) einander überlagernd angeordnet sind.

## Claims

1. Camshaft (1) for an internal combustion engine with a shaft (2) and at least one component (3) joined thereto, which is connected via a component-side joint surface (5) with a shaft-end joint surface (6), wherein the component-side joint surface (5) and/or the shaft-side joint surface (6) has a roughness (7) introduced and hardened by means of a laser (11), **characterized in that** the roughness (7) comprises a track (21) composed of individual laser points (20), wherein the centre points (22) of the individual laser points (20) are offset to each other and the individual laser points (20) are arranged superimposed on one another.

2. Camshaft according to claim 1, **characterized in that** the component (3) is formed from a metal with a carbon content of at least 0.4 wt.%, whereas the shaft (2) has a lower carbon content.

3. Camshaft according to claim 1 or 2, **characterized in that**, before the introduction of the roughness (7) by means of the laser (11), the shaft (2) is either carburized or consists of a carbon-rich material with at least 0.4 wt.% carbon.

4. Camshaft according to any of claims 1 to 3, **characterized in that** the shaft (2) is formed from E335 or C60E steel and the cam (4) from C60 or 100Cr6 steel or a sintered material.

5. Camshaft according to any of the preceding claims, **characterized in that** the predefined roughness (7) Rz is approximately 2 to 25.

6. Camshaft according to any of the preceding claims, **characterized in that** the component (3) is formed as a signal sensor wheel, a sprocket/pulley, a plug, a gear, a drive or output element, a tool interface, an adjustment element, an alignment element, a mounting aid element, a bearing ring or a sleeve.

7. Camshaft according to any of claims 1 or 6, **characterized in that** - the tracks (21) are aligned parallel, horizontal or slanted with respect to the camshaft axis (8), and/or - the component-side joint surface (5) and the shaft-side joint surface (6) have a different roughness (7).

8. Camshaft according to any of the preceding claims, **characterized in that** the component (3) is connected to a part (16), wherein component-side joint surfaces (5') are located on the component (3) and/or part-side joint surfaces (17) are located on the part (16), which are in contact with each other when the part (16) is connected to the component (3) and wherein the component-side joint surface (5') and/or the part-side joint surface (17) have a roughness (7), introduced and hardened by a laser (11), which consists of a track (21) comprised of individual laser points (20), and wherein the centre points (22) of the individual laser points (20) are arranged offset to each other and the individual laser points (20) are superimposed on one another.

9. Camshaft according to claim 8, **characterized in that** the component-side joint surfaces (5, 5') and/or the shaft-side joint surface (6) and/or the part-side joint surface (17) are located on the front or on the circumference on the respective piece.

10. Component (3) according to any of claims 1 to 9, in which the component-side joint surface (5) has a roughness (7) introduced and hardened by means of a laser (11), wherein the roughness (7) comprises a track (21) composed of individual laser points (20), wherein the centre points (22) of the individual laser points (20) are located offset to each other and the individual laser points (20) are superimposed on one another.

## Revendications

1. Arbre à cames (1) destiné à un moteur à combustion interne, comprenant un arbre (2) et au moins un élément (3) assemblé avec celui-ci, ledit élément étant relié par une surface d'assemblage (5) côté élément à une surface d'assemblage (6) côté arbre,
où la surface d'assemblage (5) côté élément et/ou la surface d'assemblage (6) côté arbre présentent une rugosité (7) réalisée et durcie par laser (11),
**caractérisé en ce que**
la rugosité (7) présente une trace (21) composée de points laser (20) individuels, où les centres (22) des points laser (20) individuels sont décalés les uns par rapport aux autres et les points laser (20) individuels sont superposés les uns aux autres.

2. Arbre à cames selon la revendication 1,
**caractérisé en ce que**
l'élément (3) est fait d'un métal présentant une fraction de carbone d'au moins 0,4 % en poids, tandis que l'arbre (2) présente une fraction de carbone plus faible.

3. Arbre à cames selon la revendication 1 ou 2,
**caractérisé en ce que**
l'arbre (2), avant de réaliser la rugosité (7) par laser (11), soit a été cémenté soit est constitué d'un matériau riche en carbone présentant une fraction d'au moins 0,4 en poids de C.

4. Arbre à cames selon l'une quelconque des revendications 1 à 3,
**caractérisé en ce que**
l'arbre (2) est fait d'acier E335 ou C60E et les cames (4) sont faites d'acier C60 ou 100Cr6 ou d'un matériau fritté.

5. Arbre à cames selon l'une quelconque des revendications précédentes, **caractérisé en ce que**
la rugosité (7) prédéfinie atteint environ Rz 2 à 25.

6. Arbre à cames selon l'une quelconque des revendications précédentes, **caractérisé en ce que**
l'élément (3) est réalisé sous la forme d'une roue émettrice de signaux, d'une roue à chaîne/à courroie, d'une butée, d'une roue dentée, d'un élément menant ou mené, d'une interface d'outil, d'un élément de réglage, d'un élément d'orientation, d'un élément d'aide au montage, d'une bague de palier ou d'une douille.

7. Arbre à cames selon l'une quelconque des revendications 1 à 6,
**caractérisé en ce que**
- les traces (21) sont orientées parallèlement, transversalement ou de manière inclinée par rapport à l'axe (8) de l'arbre à cames, et/ou
- **en ce que** la surface d'assemblage (5) côté élément et la surface d'assemblage (6) côté arbre présentent une rugosité (7) différente.

8. Arbre à cames selon l'une quelconque des revendications précédentes, **caractérisé en ce que**
un élément structural (16) est relié à l'élément (3), des surfaces d'assemblage (5') côté élément étant disposées sur l'élément (3) et/ou des surfaces d'assemblage (17) côté élément structural étant disposées sur l'élément structural (16), lesquelles surfaces sont en contact les unes avec les autres lorsque l'élément structural (16) est relié à l'élément (3) et où la surface d'assemblage (5') côté élément et/ou la surface d'assemblage (17) côté élément structural présentent une rugosité (7) réalisée et durcie par laser (11), qui possède une trace (21) composée de points laser (20) individuels et où les centres (22) des points laser (20) individuels sont décalés les uns par rapport aux autres et les points laser (20) individuels sont superposés les uns aux autres.

9. Arbre à cames selon la revendication 8,
**caractérisé en ce que**
les surfaces d'assemblage (5, 5') côté élément et/ou la surface d'assemblage (6) côté arbre et/ou la surface d'assemblage (17) côté élément structural sont disposées côté frontal ou côté périphérie sur le composant concerné.

10. Elément (3) selon l'une quelconque des revendications 1 à 9, avec lequel la surface d'assemblage (5) côté élément présente une rugosité (7) réalisée et durcie par laser (11), où la rugosité (7) présente une trace (21) composée de points laser (20) individuels, où les centres (22) des points laser (20) individuels sont décalés les uns par rapport aux autres et les points laser (20) individuels sont superposés les uns aux autres.
